# EUROPEAN PATENT APPLICATION

(11) **EP 4 156 627 A1**
(43) Date of publication of application: **29.03.2023**
(21) Application number: 20948149.8
(22) Date of filing: 04.08.2020
(51) Int. Cl.: H04L 41/00

(54) **METHOD FOR OBTAINING NETWORK SIDE ANALYSIS DATA, USER EQUIPMENT, AND NETWORK DEVICE**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Manitz Finsterwald Patent- und Rechtsanwaltspartnerschaft mbB
(86) International application number: PCT/CN2020/106715
(87) International publication number: WO 2022/027211

(57) **Abstract**

A method for obtaining network side analysis data, a user equipment (UE), and a network device. The method comprises: a UE receives first network side analysis data, the first network side analysis data being analysis data generated by a network data analysis function. The embodiments of the present application can enable a UE to obtain analysis data generated by a network data analysis function, thereby providing reference information or a basis for adjusting the behavior of the UE.

## Description

### TECHNICAL FIELD

The present disclosure relates to the communication field, and more particularly, to a method for acquiring network side analysis data, a user equipment (UE) and a network device.

### BACKGROUND

The 5th Generation Wireless Systems (5G) network adds a network data analysis function to the core network, which can collect data from various network elements and network management systems of the core network to perform big data statistics, analysis or intelligentized data analysis, so as to obtain network side analysis or predicted data. The existing network data analysis function may count or predict the following data analysis results, including: load information of a slice; service experience information of a slice or an application; network performance of a specific area, for example, resource usage, the number of UEs, session performance, mobility performance, and the like; data congestion level in a specific area; and quality of service (QoS) change analysis in a specific area or a specific time range.

The above analysis data generated by the network data analysis function cannot be provided to the UE, so these analysis data cannot provide reference information or basis for the UE to adjust UE behavior.

### SUMMARY

The embodiments of the present disclosure provide a method for acquiring network side analysis data, a UE and a network device, which can enable the UE to acquire analysis data generated by a network data analysis function, so as to provide reference information or basis for adjusting UE behavior.

The embodiments of the present disclosure provide a method for acquiring network side analysis data, which is applicable to a UE and includes the following operation.

First network side analysis data is received. The first network side analysis data is analysis data generated by a network data analysis function.

The embodiments of the present disclosure provide a method for acquiring network side analysis data, which includes the following operations.

A first network function acquires first network side analysis data generated by a network data analysis function.

The first network side analysis data is transmitted to a UE.

The embodiments of the present disclosure provide a method for transmitting network side analysis data, which includes the following operations.

A network data analysis function generates first network side analysis data.

The first network side analysis data is transmitted to a UE.

The embodiments of the present disclosure provide a method for transmitting a UE policy, which includes the following operation.

A second network function transmits the UE policy to a UE. The UE policy includes at least one of: an analysis identifier, an analysis sub-identifier or a corresponding threshold of a first network side analysis data.

The embodiments of the present disclosure provide a UE, which includes an analysis data receiving module.

The analysis data receiving module is configured to receive first network side analysis data. The first network side analysis data is analysis data generated by a network data analysis function.

The embodiments of the present disclosure provide a network device, which includes an analysis data acquiring module and an analysis data transmitting module.

The analysis data acquiring module is configured to acquire first network side analysis data generated by a network data analysis function.

The analysis data transmitting module is configured to transmit the first network side analysis data to a UE.

The embodiments of the present disclosure provide a network device, which includes a data generation module and a transmitting module.

The data generation module is configured to generate first network side analysis data.

The transmitting module is configured to transmit the first network side analysis data to a UE.

The embodiments of the present disclosure provide a network device, which includes a UE policy transmitting module.

The UE policy transmitting module is configured to transmit a UE policy to a UE. The UE policy includes at least one of: an analysis identifier, an analysis sub-identifier or a corresponding threshold of a first network side analysis data.

The embodiments of the present disclosure provide a terminal device, which includes a processor and a memory. The memory is configured to store a computer program, and the processor is configured to call and run the computer program stored in the memory to execute the method as described in any one of the above embodiments.

The embodiments of the present disclosure provide a network device, which includes a processor and a memory. The memory is configured to store a computer program, and the processor is configured to call and run the computer program stored in the memory to execute the method as described in any one of the above embodiments.

The embodiments of the present disclosure provide a chip, which includes a processor. The processor is configured to call a computer program from a memory and run the computer program, to cause a device mounted with the chip to execute the method as described in any one of the above embodiments.

The embodiments of the present disclosure provide a chip, which includes a processor. The processor is configured to call a computer program from a memory and run the computer program, to cause a device mounted with the chip to execute the method as described in any one of the above embodiments.

The embodiments of the present disclosure provide a computer readable storage medium. The computer readable storage medium is configured to store a computer program that causes a computer to execute the method as described in any one of the above embodiments.

The embodiments of the present disclosure provide a computer readable storage medium. The computer readable storage medium is configured to store a computer program that causes a computer to execute the method as described in any one of the above embodiments.

The embodiments of the present disclosure provide a computer program product. The computer program product includes one or more computer program instructions that cause a computer to execute the method as described in any one of the above embodiments.

The embodiments of the present disclosure provide a computer program product. The computer program product includes one or more computer program instructions that cause a computer to execute the method as described in any one of the above embodiments.

The embodiments of the present disclosure provide a computer program, which causes a computer to execute the method as described in any one of the above embodiments.

The embodiments of the present disclosure provide a computer program, which causes a computer to execute the method as described in any one of the above embodiments.

In the embodiments of the present disclosure, first network side analysis data generated by a network data analysis function is received by a UE, to enable the UE to acquire the analysis data generated by the network data analysis function, thereby providing reference information or basis for adjusting UE behavior.

### BRIEF DESCRIPTION OF THE DRAWINGS

FIG. 1 is a schematic diagram of an application scenario of an embodiment of the present disclosure.
FIG. 2 is an implementation flowchart of a method 200 for acquiring network side analysis data according to an embodiment of the present disclosure.
FIG. 3 is an implementation flowchart of a method 300 for acquiring network side analysis data according to an embodiment of the present disclosure.
FIG. 4 is an implementation flowchart of a first embodiment of the present disclosure.
FIG. 5 is an implementation flowchart of a second embodiment of the present disclosure.
FIG. 6 is an implementation flowchart of a third embodiment of the present disclosure.
FIG. 7 is an implementation flowchart of a fourth embodiment of the present disclosure.
FIG. 8 is an implementation flowchart of a method 800 for acquiring network side analysis data according to an embodiment of the present disclosure.
FIG. 9 is an implementation flowchart of a method 900 for transmitting network side analysis data according to an embodiment of the present disclosure.
FIG. 10 is an implementation flowchart of a method 1000 for transmitting a UE policy according to an embodiment of the present disclosure.
FIG. 11 is a schematic structural diagram of a UE 1100 according to an embodiment of the present disclosure.
FIG. 12 is a schematic structural diagram of a UE 1200 according to an embodiment of the present disclosure.
FIG. 13 is a schematic structural diagram of a network device 1300 according to an embodiment of the present disclosure.
FIG. 14 is a schematic structural diagram of a network device 1400 according to an embodiment of the present disclosure.
FIG. 15 is a schematic structural diagram of a network device 1500 according to an embodiment of the present disclosure.
FIG. 16 is a schematic structural diagram of a network device 1600 according to an embodiment of the present disclosure.
FIG. 17 is a schematic structural diagram of a network device 1700 according to an embodiment of the present disclosure.
FIG. 18 is a schematic structural diagram of a communication device 1800 according to an embodiment of the present disclosure.
FIG. 19 is a schematic structural diagram of a chip 1900 according to an embodiment of the present disclosure.

### DETAILED DESCRIPTION

The technical solutions in the embodiments of the present disclosure will be described below with reference to the accompanying drawings in the embodiments of the present disclosure.

It is to be noted that the terms "first", "second" and the like in the specification and claims of the embodiments of the present disclosure and the above accompanying drawings are used to distinguish similar objects, and unnecessary to be used to describe a specific sequence or order. The objects described by "first" and "second" may be the same or different.

The technical solutions of the embodiments of the present disclosure may be applied to various communication systems, such as a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of the NR system, a LTE-based access to unlicensed spectrum (LTE-U) system, a NR-based access to unlicensed spectrum (NR-U) system, an Universal Mobile Telecommunications System (UMTS), a Wireless Local Area Networks (WLAN), a Wireless Fidelity (WiFi), a 5th-Generation (5G) system or other communication systems.

Generally speaking, conventional communication systems support a limited number of connections and are easy to implement. However, with the development of communication technology, mobile communication systems will not only support conventional communications, but also support communications, such as, Device to Device (D2D) communication, Machine to Machine (M2M) communication, Machine Type Communication (MTC), Vehicle to Vehicle (V2V) communication and the like. The embodiments of the present disclosure may also be applied to these communication systems.

In one example, the communication system in the embodiments of the present disclosure may be applied to a Carrier Aggregation (CA) scenario, a Dual Connectivity (DC) scenario, and a Standalone (SA) networking scenario.

The embodiments of the present disclosure are not limited to the spectrum of the application. For example, the embodiments of the present disclosure may be applied to the licensed spectrum, and may also be applied to the unlicensed spectrum.

The embodiments of the present disclosure describe each embodiment with reference to a network device and a terminal device. The terminal device may also be referred to as a User Equipment (UE), an access terminal, a subscriber unit, a subscriber station, a mobile station, a mobile platform, a remote station, a remote terminal, a mobile device, a user terminal, a terminal, a wireless communication device, a user agent or a user device and the like. The terminal device may be a STAION (ST) in the WLAN, which may be a cellular phone, a cordless phone, a Session Initiation Protocol (SIP) phone, a Wireless Local Loop (WLL) station, a Personal Digital Assistant (PDA) device, a handheld device with a wireless communication function, a computing device or other processing device connected to a wireless modem, a vehicle-mounted device, a wearable device, and a terminal device in next generation communication systems, such as a terminal device in an NR network, a terminal device in a future evolved Public Land Mobile Network (PLMN) network or the like.

It is exemplary but unlimited that, in the embodiments of the present disclosure, the terminal device may also be a wearable device. The wearable device may also be called a wearable intelligent device, which is generic term of a wearable device developed by applying wearable technology to intelligently design daily wear, such as glasses, gloves, watches, clothing and shoes. The wearable device is a portable device that is worn on the body directly or integrated into user's clothes or accessories. The wearable device is not only a hardware device, but also a powerful function realized through software support, data interaction and cloud interaction. A generalized wearable intelligent device includes full-featured, large size and complete or partial functions realized without relying on smart phones, such as smart watches or smart glasses, and includes only a certain application function, which is necessary to be used in conjunction with other devices such as a smart phone, such as various smart bracelets for monitoring physical signs, or smart jewelry and the like.

The network device may be a device communicating with a mobile device. The network device may be an Access Point (AP) in the WLAN, a Base Transceiver Station (BTS) in the GSM or the CDMA, a NodeB (NB) in the WCDMA, an Evolved Node B (eNB or eNodeB) in the LTE, a relay station or an access point, a vehicle-mounted device, a wearable device, a network device in a NR network (gNB), a network device in the future evolved PLMN network or the like.

In the embodiments of the present disclosure, the network device provides services for a cell, and the terminal device communicates with the network device through transmission resources used by the cell (such as, frequency domain resources or spectrum resources). The cell may be a cell corresponding to the network device (such as, a base station), and the cell may belong to a macro base station or a base station corresponding to a small cell. The small cell here may include a metro cell, a micro cell, a pico cell, or a femto cell and the like. These small cells have characteristics of small coverage and low transmission power, which are suitable for providing high-speed data transmission services.

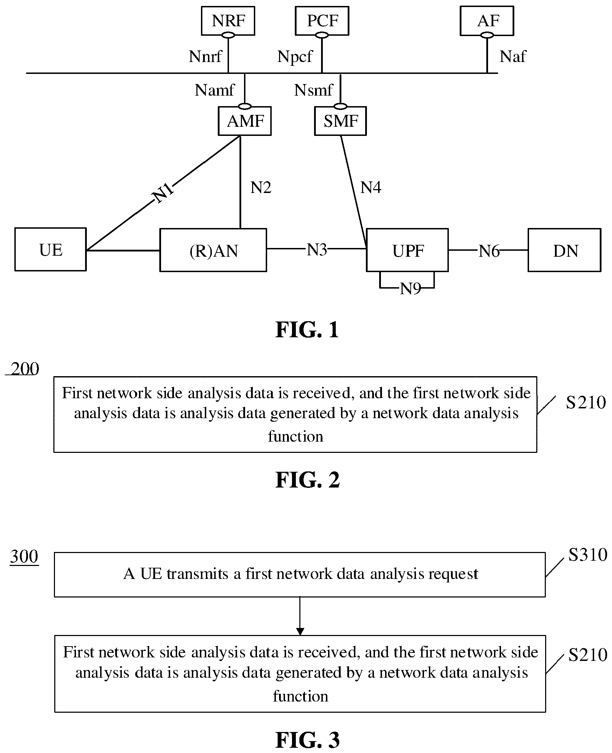

FIG. 1 exemplarily illustrates a system architecture diagram of a mobile terminal accessing a mobile network. The mobile terminal is connected with the base station by an Access Stratum (AS) to perform interaction of AS information and transmit wireless data. The UE is connected with a mobility management function by a None Access Stratum (NAS) to perform interaction of NAS information. The mobility management function is responsible for management of UE mobility, and a session management function is responsible for management of UE session. In addition to mobility management of a mobile terminal, the mobility management function is also responsible for forwarding messages related to session management between the mobile terminal and the session management function. A policy control function is responsible for formulating policies related to the mobility management of UE, session management or accounting. A user plane function is connected with the base station and an external data network for data transmission.

It is to be understood that terms "system" and "network" herein may usually be exchanged. The term "and/or" herein is only an association relationship describing associated objects and represents that three relationships may exist. For example, A and/or B may represent three conditions: i.e., independent existence of A, existence of both A and B and independent existence of B. In addition, character "/" in the disclosure usually represents that previous and next associated objects form an "or" relationship.

The 5G network adds a network data analysis function to the core network, which can collect data from various network elements and network management systems of the core network to perform big data statistics, analysis or intelligentized data analysis, so as to obtain network side analysis or predicted data. In the related art, data analysis results that are counted or predicted by the network data analysis function may be provided to each network element of the core network for use, which can effectively improve the efficiency of decision-making and behavior management of the network element on the network side. However, the UE does not consider the network side data analysis results when performing network access or service transmission, for example, the UE accesses to an over load network or slice, resulting in poor UE service experience or access being rejected by the network.

The UE is configured with various policies for network access or service transmission, such as a UE Route Selection Policy (URSP), an access network discovery and selection policy, or a path selection policy and the like. The URSP policy may be used to determine that a specific service is transmitted over a specific Packet Data Unit (PDU) session, such as a PDU session belonging to a specific slice or a Data Network Name (DNN) is selected for the specific service. The access network discovery and selection policy is used for the UE to select access to a non-3rd Generation Partnership Project (3GPP) network, such as a Wireless Local Area Network (WLAN). The path selection policy is used for the UE to select whether to access a 3GPP network through a Uu interface to perform communication or to perform near field communication directly through a PC5 interface. When the UE uses the above policies, since the UE does not know the analysis data generated by the network data analysis function, the UE cannot match or use the above policies according to the analysis data.

The embodiments of the present disclosure provide a method for acquiring network side analysis data. FIG. 2 is an implementation flowchart of a method 200 for acquiring network side analysis data according to an embodiment of the present disclosure. Optionally, the method may be applicable to the system illustrated in FIG. 1, such as applicable to a UE, but is not limited thereto. The method includes at least part of the following operations.

In S210, first network side analysis data is received, and the first network side analysis data is analysis data generated by a network data analysis function.

In one example, the above first network side analysis data corresponds to an analysis identifier of the first network side analysis data.

In one example, the analysis identifier of the first network side analysis data includes at least one of: load analysis of a slice, service experience analysis of a slice or an application, network performance analysis, data congestion level analysis, or QoS change analysis.

In some implementations, the above analysis identifier of the first network side analysis data may be carried in a first network data analysis request transmitted by the UE.

In one example, as illustrated in FIG. 3, before the above operation in S210, the method also includes the following operations.

In S310, the UE transmits a first network data analysis request.

The first network data analysis request includes at least one of: a UE identifier for requesting network data analysis; an analysis identifier of the first network side analysis data; filtering information for a requested analysis, in which the filtering information may be limited to analysis for a single UE or one/more sets of UEs or all UEs; or analysis report limitation.

In one example, the above filtering information for the requested analysis includes at least one of: a slice identifier, an application identifier, target area information of the requested analysis, target time period information of the requested analysis, a DNN, or an analysis sub-identifier.

The above analysis report limitation includes at least one of: an analytics target period, a reporting threshold, or an accuracy of the analytics.

For example, in a case where the above analysis identifier is network performance analysis, the analysis sub-identifier under the analysis identifier includes at least one of: resource usage analysis, UE number analysis, mobility performance analysis, or call performance analysis.

In the embodiments of the present disclosure, the UE may directly acquire the first network side analysis data generated by the network data analysis function from the network data analysis function; or, the UE may acquire the first network side analysis data generated by the network data analysis function through another network function entity (for example, a first network function). Specific implementations are described as follows.

### First embodiment

In the embodiment, the UE directly acquires the first network side analysis data generated by the network data analysis function from the network data analysis function.

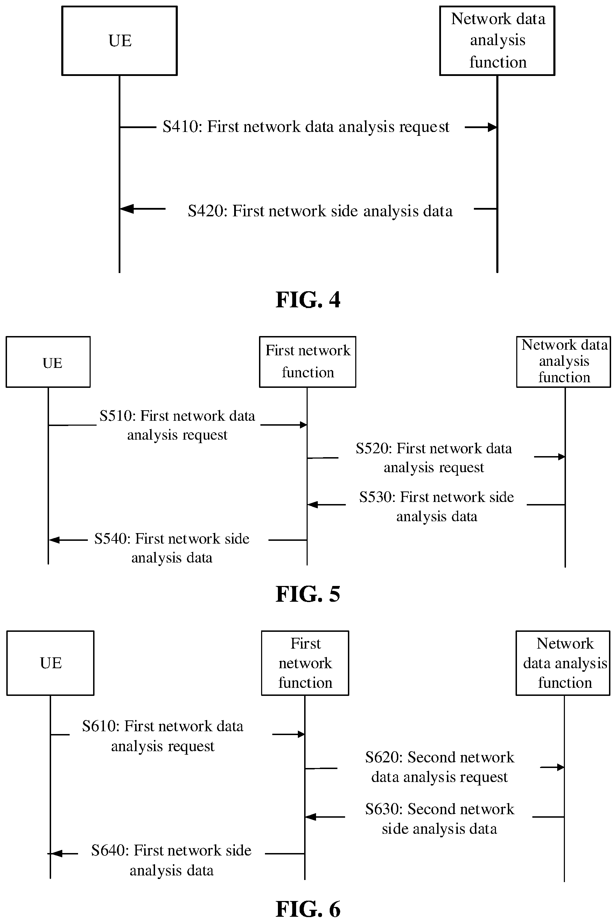

FIG. 4 is an implementation flowchart of the first embodiment of the present disclosure, which includes the following operations.

In S410, a UE transmits a first network data analysis request to a network data analysis function through a user plane according to routing information of the network data analysis function.

The routing information of the network data analysis function may include IP address, Fully Qualified Domain Name (FQDN) and other information.

The first network data analysis request may include information such as the analysis identifier of the first network side analysis data, and specific contents included are the same as those in the above embodiments, which will not be repeated here.

In S420, the network data analysis function transmits first network side analysis data to the UE, and the first network side analysis data corresponds to an analysis identifier of the first network side analysis data.

The above operation in S410 is an optional operation. That is, the network data analysis function may not only transmit the first network side analysis data to the UE according to the request transmitted by the UE, but also actively push the first network side analysis data to the UE.

### Second embodiment

In the embodiments, the UE acquires the first network side analysis data generated by the network data analysis function through the first network function. FIG. 5 is an implementation flowchart of the second embodiment of the present disclosure, which includes the following operations.

In S510, a UE transmits a first network data analysis request to a first network function. The first network function may be, for example, a mobility management function, a session management function, or a policy management function, and may also be an application function with routing information known by the UE .

The first network data analysis request may include information such as the analysis identifier of the first network side analysis data, and specific contents included are the same as those in the above embodiments, which will not be repeated here.

In S520, the first network function determines a corresponding network data analysis function according to the analysis identifier of the first network side analysis data. For example, a Network Storage Function (NRF) is queried through the analysis identifier of the first network side analysis data to determine the corresponding network data analysis function. After the determination, the first network function forwards the first network data analysis request to the network data analysis function.

In S530, the network data analysis function transmits the first network side analysis data to the first network function. The first network side analysis data corresponds to the analysis identifier of the first network side analysis data.

In S540, the first network function forwards the received first network side analysis data to the UE.

It can be seen that the first network function is used to forward the first network data analysis request and the first network side analysis data between the UE and the network data analysis function.

The above operation in S510 is an optional operation. That is, the first network function may not only acquire the first network side analysis data from the network data analysis function according to the request transmitted by the UE, but also actively acquire the first network side analysis data from the network data analysis function and actively push the acquired first network side analysis data to the corresponding UE.

### Third embodiment

Similar to the second embodiment, in the present embodiment, the UE acquires the network side analysis data generated by the network data analysis function through the first network function. The difference from the second embodiment is that, in the present embodiment, the first network function does not directly forward the request and the data, but generates a second network data analysis request based on the first network data analysis request received from the UE, and performs a network data analysis request to the network data analysis function as the first network function. In this case, it may be considered that the UE and the first network function directly interact the first network data analysis request and the first network side analysis data. The network data analysis function only perceives the second network data analysis request from the first network function and does not perceive the first network data analysis request from the UE. A specific implementation process is illustrated in Figure 6, which includes the following operations.

In S610, a UE transmits a first network data analysis request to a first network function. The first network function may be for example, a mobility management function, a session management function, or a policy management function, and may also be an application function with routing information known by the UE.

The first network data analysis request may include information such as the analysis identifier of the first network side analysis data, and specific contents included are the same as those in the above embodiments, which will not be repeated here.

In S620, the first network function determines a second network data analysis request transmitted by the first network function to a network data analysis function according to first network data analysis requests from multiple UEs or the data analysis request of the first network function itself, and transmits the second network data analysis request to the network data analysis function.

In S630, the network data analysis function transmits second network side analysis data to the first network function according to the second network data analysis request.

In S640, the first network function determines the first network side analysis data that needs to be transmitted to the UE according to the second network side analysis data, and transmits the first network side analysis data to the UE.

The above operation in S610 is an optional operation. That is, the first network function may not only generate the second network data analysis request according to the request transmitted by the UE, acquire the second network side analysis data from the network data analysis function, and then transmit the corresponding first network side analysis data to the UE; but also actively acquire the second network side analysis data from the network data analysis function, and actively push the corresponding first network side analysis data to the UE.

The above three embodiments describe the manners in which the UE acquires the first network side analysis data. Using the acquired first network side analysis data, the following operations may be further performed.

The UE determines a PDU session parameter using the first network side analysis data; and/or, the UE determines an access network using the first network side analysis data; and/or, the UE determines an access mode using the first network side analysis data; and/or, in a case where a service needs to be initiated, the UE determines QoS requirement for the service according to the first network side analysis data; and/or, the UE selects a cell to be accessed according to the first network side analysis data in a case where cell selection is performed.

In one example, the above operation that the UE determines the PDU session parameter using the first network side analysis data may include the following operations. The UE performs a URSP to obtain corresponding PDU session parameters, and selects the PDU session parameter used by the UE from the corresponding PDU session parameters using the first network side analysis data. The above PDU session parameters include but are not limited to slice information and DNN information.

In one example, the above operation that the UE determines the access network using the first network side analysis data may include the following operations. The UE performs an access network discovery and selection policy to determine corresponding access networks, and selects the access network accessed by the UE from the corresponding access networks using the first network side analysis data.

In one example, the above operation that the UE determines the access mode using the first network side analysis data may include the following operations. The UE performs a path selection policy to obtain corresponding access modes, and determines whether to adopt 3GPP network access or near field communication access from the corresponding access modes using the first network side analysis data. When it is determined to adopt the 3GPP network access, the UE may access the 3GPP network through the Uu interface; and when it is determined to adopt the near field communication access, the UE may perform the near field direct communication through the PC5 interface.

Specifically, according to the acquired first network side analysis data, the UE may be used for, but not limited to, the following examples.

First, determination of PDU session parameters, such as slice information and DNN information.

For example, the UE has acquired the URSP policy, the UE determines that the service to be initiated matches with the service description in the URSP policy according to the URSP policy. There are multiple available slices in the corresponding route selection description, and the UE may select a slice with lighter load to perform service transmission according to the slice load analysis results acquired from the network side.

Second, selection of the access network.

For example, the UE has acquired the access network discovery and selection policy. The UE determines multiple access networks that may be accessed according to the access network discovery and selection policy, and selects an access network with better performance according to the network performance analysis result acquired from the network side.

Third, selection of the access mode such as near field communication.

For example, the UE has acquired the path selection policy. The UE determines according to the path selection policy that the service to be initiated matches with the service description in the path selection policy, and the corresponding path selection right may be that both Uu and PC5 paths are available. When the UE determines that the Uu access quality is better according to the analysis results acquired from the network side, such as network performance analysis, data congestion level analysis, QoS change analysis, the Uu may be selected for the network access.

Fourth, determination of an initiated service QoS.

In a case where the service needs to be initiated, the UE determines a more suitable service QoS requirement according to the analysis results acquired from the network, such as the network performance analysis, the data congestion level analysis, the QoS change analysis. For example, for a video playback service, the UE selects standard definition video playback when it is determined that the network performance is poor, and selects high definition video playback when it is determined that the network performance is good.

Fifth, cell selection.

In a case where cell selection is performed, the UE selects a cell with better access performance according to the network performance analysis results, such as the resource usage analysis, the UE number analysis, the mobile performance analysis and the call performance analysis.

### Fourth embodiment

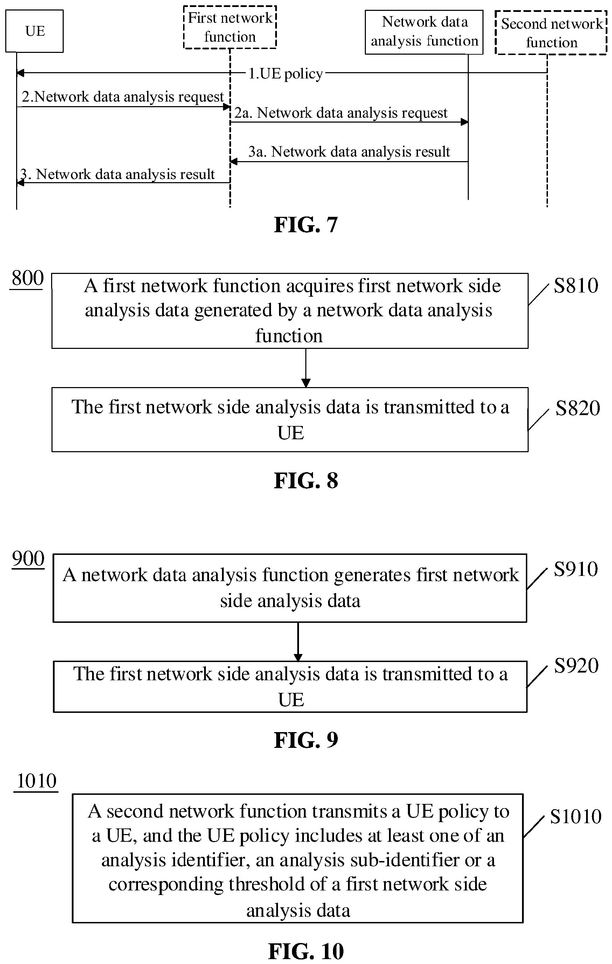

In the present embodiment, the UE policy is modified, and the UE may acquire the UE policy from the second network function, and perform matching on and/or use the UE policy according to the first network side analysis data. In the present embodiment, the manner of acquiring the first network side analysis data may adopt any one of the above first, second and third embodiments. FIG. 7 is an implementation flowchart of the fourth embodiment of the present disclosure. In FIG. 7, the manner in which the UE acquires the first network side analysis data via the first network function is illustrated, and the manner in which the UE directly acquires the first network side analysis data from the network data analysis function (i.e., the implementation in the first embodiment) is not illustrated in FIG. 7.

In the present embodiment, the UE policy acquired by the UE from the second network function includes the network side condition, for example, specifically includes an analysis identifier, an analysis sub-identifier or a corresponding threshold of the first network side analysis data, which is used to instruct the UE to perform matching on and use the UE policy according to the acquired the first network side data analysis result. The second network function may be a policy control function in the core network. The UE policy includes but is not limited to the URSP, the access network discovery and selection policy, or the path selection policy.

In one example, the UE policy includes a service description, and the service description includes at least one of: an analysis identifier, an analysis sub-identifier or a corresponding threshold of the first network side analysis data.

Or, in one example, the UE policy includes a valid condition for a policy execution result, and the valid condition for the policy execution result includes at least one of: an analysis identifier, an analysis sub-identifier or a corresponding threshold of the first network side analysis data.

The following is given by taking the UE policy being the URSP policy as an example, but may also be used for other UE policies that are not limited to the URSP policy. In the URSP policy, the above valid condition for the policy execution result may be specifically a valid condition of routing selection.

In one case, according to an example of the URSP rule list in Table 1 below, the network side condition is added to the service description of the URSP policy for matching the service, which may include the analysis identifier, the analysis sub-identifier and/or the corresponding threshold of the first network side analysis data. Table 2 is an example of the routing selection description list in the URSP policy.

For example, the service description of the URSP rule 1 includes the application identifier a and the service experience analysis>4, and the routing selection description includes the slice identifier b. The service description of the URSP rule 2 includes the application identifier a and the service experience analysis>2, and the routing description includes the slice identifier c. When the UE needs to perform the service with the application identifier a, if the service experience prediction of the application acquired by the UE is 3, the URSP rule 2 is matched and the slice identifier c is selected to perform the service transmission.

**Table 1 URSP rule**

| **Information name** | **Description** |
|---|---|
| **Service description** | |
| Application identifier | It includes an operating system identifier and an application identifier |
| IP header description | Destination IP 3 tuple |
| Domain name description | A target domain name |
| ... | ... |
| Network side condition | An analysis identifier, an analysis sub-identifier and/or a corresponding threshold of a network side analysis data |
| **Routing selection description list** | |

**Table 2-Routing selection description**

| **Information name** | **Description** |
|---|---|
| **Routing selection component** | |
| Network slice selection | Slice identifier |
| DNN selection | DNN |
| Access type selection | 3GPP or non-3GPP access |
| ... | ... |
| **Valid condition of routing selection** | This part defines the Route Validation Criteria components |
| Time condition | |
| Position condition | |

In another case, according to the URSP rule list shown in Table 3 and an example of the routing selection description list in the URSP policy shown in Table 4 below, the network side condition is added to the valid condition of routing selection in the URSP policy, and may include the analysis identifier, the analysis sub-identifier or the corresponding threshold of the first network side analysis data.

For example, the service description of the URSP rule 1 includes the application identifier a, the routing selection description includes the slice identifier b and the valid condition of routing selection is the slice load < 60%. The service description of the URSP rule 2 includes the application identifier a, the routing selection description includes the slice identifier c, and the valid condition of routing selection is the slice load < 30%. When the UE needs to perform the service with the application identifier a, if the slice load condition acquired by the UE from the network is 50%, although both the URSP rule 1 and the URSP rule 2 are matched with the application to be performed by the UE, only the routing selection description of the URSP rule 1 is valid according to determination of the UE, and the slice identifier b is selected to perform the service transmission according to the URSP rule 1.

**Table 3 URSP rule**

| **Information name** | **Description** |
|---|---|
| **Service description** | |
| Application identifier | It includes an operating system identifier and an application identifier |
| IP header description | Destination IP 3 tuple |
| Domain name description | A target domain name |
| ... | ... |
| **Routing selection description list** | |

**Table 4-Routing selection description**

| **Information name** | **Description** |
|---|---|
| **Routing selection component** | |
| Network slice selection | Slice identifier |
| DNN selection | DNN |
| Access type selection | 3GPP or non-3GPP access |
| ... | ... |
| **Valid condition of routing selection** | This part defines the Route Validation Criteria components |
| Time condition | |
| Position condition | |
| Network side condition | |

As can be seen from the above examples, the embodiments of the present disclosure solve the problem that the UE may select to access to an overloaded network or slice since the UE does not consider the network side conditions when performing the network access or service transmission, which results in the access being rejected by the network or poor service experience after the UE accesses to the network, thereby improving the service experience of the UE.

The embodiments of the present disclosure also provide a method for acquiring network side analysis data. FIG. 8 is an implementation flowchart of a method 800 for acquiring network side analysis data according to an embodiment of the present disclosure. Optionally, the method may be applicable to the system illustrated in FIG. 1, such as applicable to a first network function but is not limited thereto. The method includes at least part of the following operations.

In S810, a first network function acquires first network side analysis data generated by a network data analysis function.

In S820, the first network side analysis data is transmitted to the UE.

In one example, the first network side analysis data corresponds to an analysis identifier of the first network side analysis data.

In one example, the analysis identifier of the first network side analysis data includes at least one of: load analysis of a slice, service experience analysis of a slice or an application, network performance analysis, data congestion level analysis, or QoS change analysis.

In one example, before the above acquiring operation, the method also includes the following operation. A first network data analysis request from the UE is received.

The first network data analysis request includes at least one of: a UE identifier for requesting network data analysis; an analysis identifier of the first network side analysis data; filtering information for a requested analysis; or analysis report limitation.

In one example, the above filtering information for the requested analysis includes at least one of: a slice identifier, an application identifier, target area information of the requested analysis, target time period information of the requested analysis, a DNN, or an analysis sub-identifier.

In one example, the above analysis report limitation includes at least one of: an analytics target period, a reporting threshold, or an accuracy of the analytics.

In one example, the analysis sub-identifier includes at least one of: resource usage analysis, UE number analysis, mobility performance analysis, or call performance analysis.

In one example, the above operation that the first network side analysis data generated by the network data analysis function is acquired includes the following operations.

The first network data analysis request is transmitted to the network data analysis function.

The first network side analysis data is received from the network data analysis function.

In one example, the above operation that the first network side analysis data generated by the network data analysis function is acquired includes the following operations.

A corresponding second network data analysis request is determined according to the first network data analysis request.

The second network data analysis request is transmitted to the network data analysis function.

Second network side analysis data is received from the network data analysis function.

The corresponding first network side analysis data is determined according to the second network side analysis data.

In one example, the first network function determines the network data analysis function according to the analysis identifier of the first network side analysis data.

In one example, the first network function includes at least one of: a mobility management function, a session management function, a policy management function, or an application function with routing information known by the UE.

The embodiments of the present disclosure also provide a method for transmitting network side analysis data. FIG. 9 is an implementation flowchart of a method 900 for transmitting network side analysis data according to an embodiment of the present disclosure. Optionally, the method may be applicable to the system illustrated in FIG. 1, such as applicable to the network data analysis function but is not limited thereto. The method includes at least part of the following operations.

In S910, a network data analysis function generates first network side analysis data.

In S920, the first network side analysis data is transmitted to a UE.

In one example, the first network side analysis data corresponds to an analysis identifier of the first network side analysis data.

In one example, the analysis identifier of the first network side analysis data includes at least one of: load analysis of a slice, service experience analysis of a slice or an application, network performance analysis, data congestion level analysis, or QoS change analysis.

In one example, before the first network side analysis data is generated, the method also includes the following operation. A first network data analysis request from the UE is received.

The first network data analysis request includes at least one of: a UE identifier for requesting network data analysis; an analysis identifier of the first network side analysis data; filtering information for a requested analysis; or analysis report limitation.

In one example, the filtering information for the requested analysis includes at least one of: a slice identifier, an application identifier, target area information of the requested analysis, target time period information of the requested analysis, a DNN, or an analysis sub-identifier

In one example, the analysis report limitation includes at least one of: an analytics target period, a reporting threshold, or an accuracy of the analytics.

In one example, the analysis sub-identifier includes at least one of: resource usage analysis, UE number analysis, mobility performance analysis, or call performance analysis.

The embodiments of the present disclosure also provide a method for transmitting a UE policy. FIG. 10 is an implementation flowchart of a method 1000 for transmitting a UE policy according to an embodiment of the present disclosure. Optionally, the method may be applied to the system illustrated in FIG. 1, such as applicable to a second network function, but is not limited thereto. The method includes at least part of the following operation.

In S1010, a second network function transmits the UE policy to a UE, and the UE policy includes at least one of: an analysis identifier, an analysis sub-identifier or a corresponding threshold of first network side analysis data.

In one example, the UE policy includes a service description, and the service description includes at least one of: the analysis identifier, the analysis sub-identifier or the corresponding threshold of the first network side analysis data.

In one example, the UE policy includes a valid condition for a policy execution result, and the valid condition for the policy execution result includes at least one of: the analysis identifier, the analysis sub-identifier or the corresponding threshold of the first network side analysis data.

In one example, the UE policy includes at least one of: a URSP, an access network discovery and selection policy, or a path selection policy.

In one example, the second network function includes a policy control function.

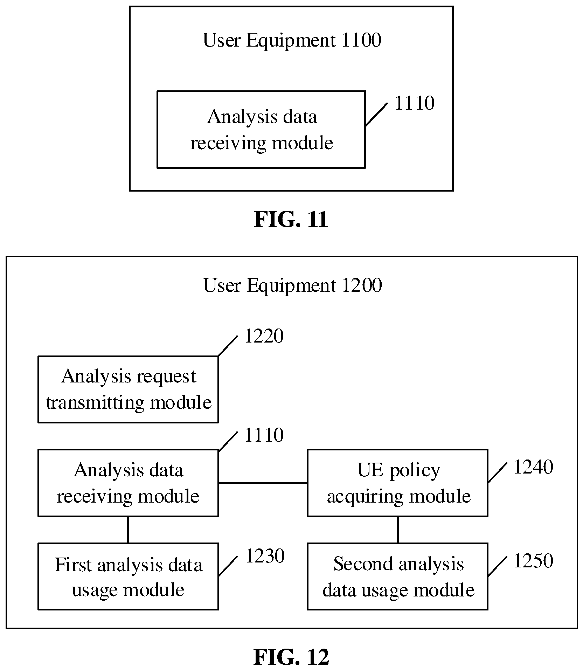

The embodiments of the present disclosure also provide a UE. FIG. 11 is a schematic structural diagram of a UE 1100 according to an embodiment of the present disclosure, which includes an analysis data receiving module 1100.

The analysis data receiving module 1100 is configured to receive first network side analysis data. The first network side analysis data is analysis data generated by a network data analysis function.

In one example, the first network side analysis data corresponds to an analysis identifier of the first network side analysis data.

In one example, the analysis identifier of the first network side analysis data includes at least one of: load analysis of a slice, service experience analysis of a slice or an application, network performance analysis, data congestion level analysis, or QoS change analysis.

As illustrated in FIG. 12, in one example, the UE also includes an analysis request transmitting module 1220.

The analysis request transmitting module 1220 is configured to transmit a first network data analysis request.

The first network data analysis request includes at least one of: a UE identifier for requesting network data analysis; an analysis identifier of the first network side analysis data; filtering information for a requested analysis; or analysis report limitation.

In one example, the filtering information for the requested analysis includes at least one of: a slice identifier, an application identifier, target area information of the requested analysis, target time period information of the requested analysis, a DNN, or an analysis sub-identifier.

The analysis report limitation includes at least one of: an analytics target period, a reporting threshold, or an accuracy of the analytics.

In one example, the above analysis sub-identifier includes at least one of: resource usage analysis, UE number analysis, mobility performance analysis, or call performance analysis.

In one example, the analysis request transmitting module 1220 is configured to transmit the first network data analysis request to the network data analysis function through a user plane according to routing information of the network data analysis function.

In one example, the analysis data receiving module 1110 is configured to receive the first network side analysis data from the network data analysis function.

In one example, the analysis request transmitting module 1220 is configured to transmit the first network data analysis request to a first network function.

The analysis data receiving module 1110 is configured to receive the first network side analysis data from the first network function.

In one example, the first network function includes at least one of: a mobility management function, a session management function, a policy management function, or an application function with routing information known by the UE.

In one example, as illustrated in FIG. 12, the UE also includes a first analysis data usage module 1230. The first analysis data usage module 1230 is configured to determine a PDU session parameter using the first network side analysis data; and/or, determine an access network using the first network side analysis data; and/or, determine an access mode using the first network side analysis data; and/or, determine, in a case where the UE needs to initiate a service, QoS requirement for the service according to the first network side analysis data; and/or, select a cell to be accessed according to the first network side analysis data in a case where the UE performs cell selection.

In one example, the first analysis data usage module 1230 is configured to:
perform a URSP to obtain corresponding PDU session parameters, and select the PDU session parameter used by the UE from the corresponding PDU session parameters using the first network side analysis data; and/or,
perform an access network discovery and selection policy to determine corresponding access networks, and select the access network accessed by the UE from the corresponding access networks using the first network side analysis data; and/or,
perform a path selection policy to obtain corresponding access modes, and determine whether to adopt 3GPP network access or near field communication access from the corresponding access modes using the first network side analysis data.

In one example, as illustrated in FIG. 12, the UE also includes a UE policy acquiring module 1240 and a second analysis data usage module 1250. The UE policy acquiring module 1240 is configured to acquire a UE Policy from a second network function.

The second analysis data usage module 1250 is configured to perform matching on and/or use the UE policy according to the first network side analysis data.

In one example, the UE policy includes at least one of: an analysis identifier, an analysis sub-identifier or a corresponding threshold of the first network side analysis data.

In one example, the UE policy includes a service description, and the service description includes at least one of: an analysis identifier, an analysis sub-identifier or a corresponding threshold of the first network side analysis data.

In one example, the UE policy includes a valid condition for a policy execution result, and the valid condition for the policy execution result includes at least one of: an analysis identifier, an analysis sub-identifier or a corresponding threshold of the first network side analysis data.

In one example, the UE policy includes at least one of: a URSP, an access network discovery and selection policy, or a path selection policy.

In one example, the second network function includes a policy control function.

It is to be understood that the above and other operations and/or functions of the modules in the terminal device according to the embodiments of the present disclosure are intended to implement the corresponding flow of the UE in the method 200 of FIG. 2 or the method 300 of FIG. 3 respectively, which will not be elaborated herein for brief description.

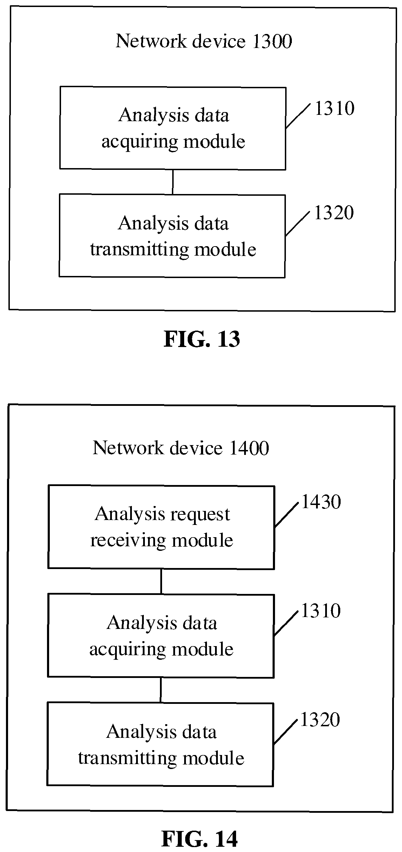

The embodiments of the present disclosure also provide a network device, which may be the first network function mentioned above. FIG. 13 is a schematic structural diagram of a network device 1300 according to an embodiment of the present disclosure, which includes an analysis data acquiring module 1310 and an analysis data transmitting module 1320.

The analysis data acquiring module 1310 is configured to acquire first network side analysis data generated by a network data analysis function.

The analysis data transmitting module 1320 is configured to transmit the first network side analysis data to a UE.

In one example, the first network side analysis data corresponds to an analysis identifier of the first network side analysis data.

In one example, the analysis identifier of the first network side analysis data includes at least one of: load analysis of a slice, service experience analysis of a slice or an application, network performance analysis, data congestion level analysis, or QoS change analysis.

In one example, as illustrated in FIG. 14, the network device also includes an analysis request receiving module 1430.

The analysis request receiving module 1430 is configured to receive a first network data analysis request from the UE.

The first network data analysis request includes at least one of: a UE identifier for requesting network data analysis; an analysis identifier of the first network side analysis data; filtering information for a requested analysis; or analysis report limitation.

In one example, the filtering information for the requested analysis includes at least one of: a slice identifier, an application identifier, target area information of the requested analysis, target time period information of the requested analysis, a DNN, or an analysis sub-identifier.

The analysis report limitation includes at least one of: an analytics target period, a reporting threshold, or an accuracy of the analytics.

In one example, the analysis sub-identifier includes at least one of: resource usage analysis, UE number analysis, mobility performance analysis, or call performance analysis.

In one example, the analysis data acquiring module 1310 is configured to transmit the first network data analysis request to the network data analysis function, and receive the first network side analysis data from the network data analysis function.

In one example, the analysis data acquiring module 1310 is configured to determine a corresponding second network data analysis request according to the first network data analysis request, transmit the second network data analysis request to the network data analysis function, receive second network side analysis data from the network data analysis function, and determine the corresponding first network side analysis data according to the second network side analysis data.

In one example, the analysis data acquiring module 1310 is configured to determine the network data analysis function according to the analysis identifier of the first network side analysis data.

In one example, the network device includes at least one of: a mobility management function, a session management function, a policy management function, or an application function with routing information known by the UE.

It is to be understood that the above and other operations and/or functions of the modules in the network device according to the embodiments of the present disclosure are intended to implement the corresponding flow of the first network function in the method 800 of FIG. 8, which will not be elaborated herein for brief description.

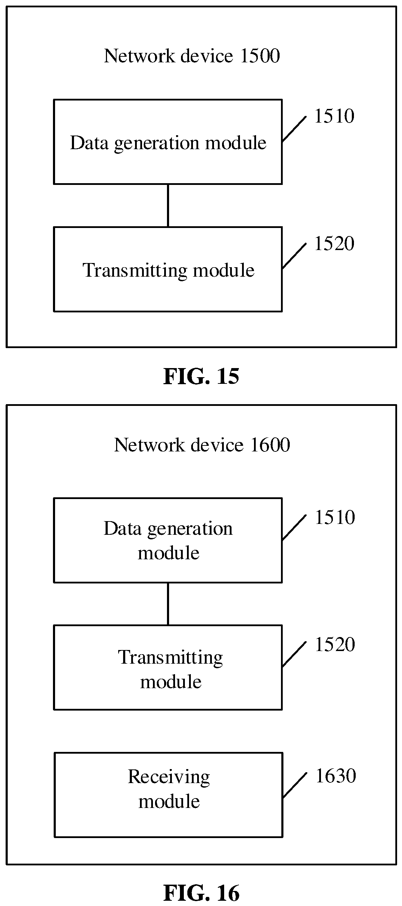

The embodiments of the present disclosure also provide a network device, which may be the network data analysis function mentioned above. FIG. 15 is a schematic structural diagram of a network device 1500 according to an embodiment of the present disclosure, which includes a data generation module 1510 and a transmitting module 1520.

The data generation module 1510 is configured to generate first network side analysis data.

The transmitting module 1520 is configured to transmit the first network side analysis data to a UE.

In one example, the first network side analysis data corresponds to an analysis identifier of the first network side analysis data.

In one example, the analysis identifier of the first network side analysis data includes at least one of: load analysis of a slice, service experience analysis of a slice or an application, network performance analysis, data congestion level analysis, or QoS change analysis.

In one example, as illustrated in FIG. 16, the network device also includes a receiving module 1630. The receiving module 1630 is configured to receive a first network data analysis request from the UE.

The first network data analysis request includes at least one of: a UE identifier for requesting network data analysis; an analysis identifier of the first network side analysis data; filtering information for a requested analysis; or analysis report limitation.

In one example, the above filtering information for the requested analysis includes at least one of: a slice identifier, an application identifier, target area information of the requested analysis, target time period information of the requested analysis, a DNN, or an analysis sub-identifier.

The analysis report limitation includes at least one of: an analytics target period, a reporting threshold, or an accuracy of the analytics.

In one example, the above analysis sub-identifier includes at least one of: resource usage analysis, UE number analysis, mobility performance analysis, or call performance analysis.

It is to be understood that the above and other operations and/or functions of the modules in the network device according to the embodiments of the present disclosure are intended to implement the corresponding flow of the network data analysis function in the method 900 of FIG. 9, which will not be elaborated herein for brief description.

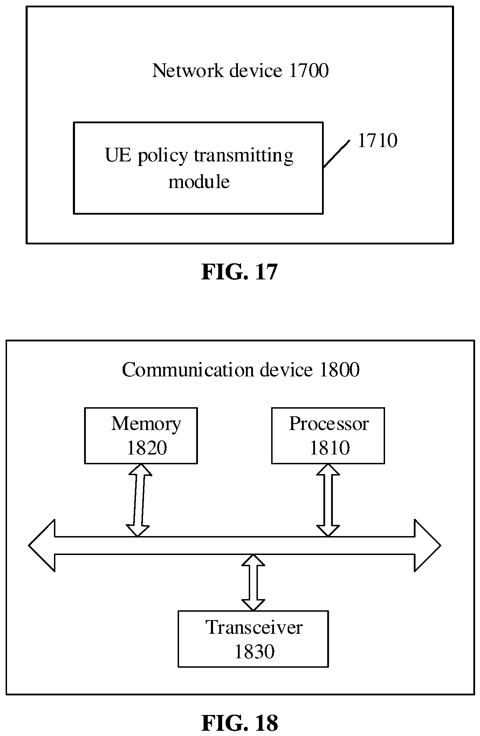

The embodiments of the present disclosure also provide a network device, which may be the second network function mentioned above. FIG. 17 is a schematic structural diagram of a network device 1700 according to an embodiment of the present disclosure, which includes a UE policy transmitting module 1710.

The UE policy transmitting module 1710 is configured to transmit a UE policy to a UE. The UE policy includes at least one of: an analysis identifier, an analysis sub-identifier or a corresponding threshold of first network side analysis data.

In one example, the UE policy includes a service description, and the service description includes at least one of: the analysis identifier, the analysis sub-identifier or the corresponding threshold of the first network side analysis data.

In one example, the UE policy includes a valid condition for a policy execution result, and the valid condition for the policy execution result includes at least one of: the analysis identifier, the analysis sub-identifier or the corresponding threshold of the first network side analysis data.

In one example, the UE policy includes at least one of: a URSP, an access network discovery and selection policy, or a path selection policy.

In one example, the above network device includes a policy control function.

FIG. 18 is a schematic structural diagram of a communication device 1800 according to an embodiment of the present disclosure. The communication device 1800 illustrated in FIG. 18 includes a processor 1810. The processor 1810 may call a computer program from a memory and run the computer program to perform the methods in the embodiments of the present disclosure.

In one example, as illustrated in FIG. 18, the communication device 1800 may also include a memory 1820. The processor 1810 may call a computer program from the memory 1820 and run the computer program to perform the methods in the embodiments of the present disclosure.

The memory 1820 may be a separate device from the processor 1810, or may be integrated into the processor 1810.

In one example, as illustrated in FIG. 18, the communication device 1800 may also include a transceiver 1830. The processor 1810 may control the transceiver 1830 to communicate with another device, specifically, to transmit information or data to another device, or receive information or data from another device.

The transceiver 1830 may include a transmitter and a receiver. The transceiver 1830 may further include one or more antennas.

In one example, the communication device 1800 may be the terminal device in the embodiments of the present disclosure. The communication device 1800 may implement a corresponding process implemented by the terminal device in each method of the embodiments of the present disclosure, which will not be elaborated herein for brief description.

In one example, the communication device 1800 may be the network device in the embodiments of the present disclosure. The communication device 1800 may implement a corresponding process implemented by the network device in each method of the embodiments of the disclosure, which will not be elaborated herein for brief description.

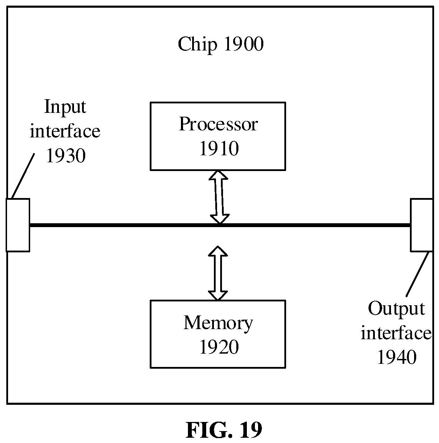

FIG. 19 is a schematic structural diagram of a chip 1900 according to an embodiment of the present disclosure. The chip 1900 illustrated in FIG. 19 includes a processor 1910. The processor 1910 may call a computer program from a memory and run the computer program to perform the methods in the embodiments of the present disclosure.

In one example, as illustrated in FIG. 19, the chip 1900 may also include a memory 1920. The processor 1910 may call a computer program from the memory 1920 and run the computer program to perform the methods in the embodiments of the present disclosure.

The memory 1920 may be a separate device from the processor 1910, or may be integrated in the processor 1910.

In one example, the chip 1900 may also include an input interface 1930. The processor 1910 may control the input interface 1930 to communicate with another device or chip, and specifically, may acquire information or data transmitted by another device or chip.

In one example, the chip 1900 may also include an output interface 1940. The processor 1910 may control the output interface 1940 to communicate with another device or chip, and specifically, may output information or data to another device or chip.

In one example, the chip may be applied to the terminal device in the embodiments of the present disclosure. The chip may implement a corresponding process implemented by the terminal device in each method of the embodiments of the disclosure, which will not be elaborated herein for brief description.

It is to be understood that in the embodiments of the disclosure, the chip may also be referred to as a system level chip, a system chip, a chip system or a system-on-chip.

The processor mentioned above may be a universal processor, a Digital Signal Processor (DSP), a Field Programmable Gate Array (FPGA), an Application Specific Integrated Circuit (ASIC), or another programmable logical device, transistor logical device or discrete hardware component. The universal processor mentioned above may be a microprocessor or any conventional processors and the like.

The memory mentioned above may be a volatile memory or a non-volatile memory, or may include the volatile memory and the non-volatile memory. The non-volatile memory may be a Read-Only Memory (ROM), a Programmable ROM (PROM), an Erasable PROM (EPROM), an electrically EPROM (EEPROM) or flash memory. The volatile memory may be a random access memory (RAM).

It is to be understood that the above memory is exemplarily but unlimitedly described. For example, the memory in the embodiments of the disclosure may also be a static RAM (SRAM), a dynamic RAM (DRAM), an synchronous DRAM (SDRAM), a double data rate SDRAM (DDR SDRAM), an enhanced SDRAM (ESDRAM), a synch link DRAM (SLDRAM) and a Direct Rambus RAM (DR RAM). That is, the memory in the embodiments of the disclosure is intended to include but not limited to memories of these and any other suitable type.

The above embodiments may be implemented in whole or in part by software, hardware, firmware or any combination thereof. When implemented by software, the above embodiments may be implemented in the form of a computer program product in whole or in part. The computer program product includes one or more computer instructions. When the one or more computer program instructions are loaded and executed on a computer, the flows or functions described in accordance with the embodiments of the present disclosure are generated in whole or in part. The computer may be a universal computer, a dedicated computer, a computer network, or other programmable device. The computer instructions may be stored in a computer readable storage medium, or transmitted from one computer readable storage medium to another computer readable storage medium. For example, the computer instructions may be transmitted from one Web site, computer, server, or data center to another Web site, computer, server, or data center via wired (e.g., a coaxial cable, optical fiber, Digital Subscriber Line (DSL)) or wireless (e.g., infrared, wireless, microwave and so on). The computer readable storage medium may be any available medium that may be accessed by a computer, or data storage devices such as a server or a data center which are integrated with one or more available media. The available media may be magnetic media (e.g., a floppy disk, hard disk, magnetic tape), an optical media (e.g., DVD), or a semiconductor media (e.g., Solid State Disk (SSD)) and the like.

It is to be understood that, in various embodiments of the present disclosure, a magnitude of a sequence number of each process does not mean an execution sequence, and the execution sequence of each process should be determined by its function and an internal logic and should not form any limit to an implementation process of the embodiments of the disclosure.

Those skilled in the art may clearly learn about that specific working processes of the system, device and unit described above may refer to the corresponding processes in the method embodiments and will not be elaborated herein for convenient and brief description.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A method for acquiring network side analysis data, applicable to a User Equipment, UE, and comprising:
receiving first network side analysis data, the first network side analysis data being analysis data generated by a network data analysis function.

2. The method of claim 1, wherein the first network side analysis data corresponds to an analysis identifier of the first network side analysis data.

3. The method of claim 2, wherein the analysis identifier of the first network side analysis data comprises at least one of: load analysis of a slice, service experience analysis of a slice or an application, network performance analysis, data congestion level analysis, or quality of service, QoS, change analysis.

4. The method of any one of claims 1 to 3, wherein before the receiving, the method further comprises: transmitting, by the UE, a first network data analysis request;
wherein the first network data analysis request comprises at least one of:
a UE identifier for requesting network data analysis;
an analysis identifier of the first network side analysis data;
filtering information for a requested analysis; or
analysis report limitation.

5. The method of claim 4, wherein the filtering information for the requested analysis comprises at least one of: a slice identifier, an application identifier, target area information of the requested analysis, target time period information of the requested analysis, a Data Network Name, DNN, or an analysis sub-identifier; and
the analysis report limitation comprises at least one of: an analytics target period, a reporting threshold, or an accuracy of the analytics.

6. The method of claim 5, wherein the analysis sub-identifier comprises at least one of: resource usage analysis, UE number analysis, mobility performance analysis, or call performance analysis.

7. The method of any one of claims 4 to 6, wherein the first network data analysis request is transmitted by the UE transmits to the network data analysis function through a user plane according to routing information of the network data analysis function; and
the first network side analysis data is received by the UE from the network data analysis function.

8. The method of any one of claims 4 to 6, wherein the first network data analysis request is transmitted by the UE to a first network function; and
the first network side analysis data is received by the UE from the first network function.

9. The method of claim 8, wherein the first network function comprises at least one of: a mobility management function, a session management function, a policy management function, or an application function with routing information known by the UE.

10. The method of any one of claims 1 to 9, further comprising at least one of:
determining, by the UE, a Packet Data Unit, PDU, session parameter using the first network side analysis data;
determining, by the UE, an access network using the first network side analysis data;
determining, by the UE, an access mode using the first network side analysis data;
determining, by the UE in a case where a service needs to be initiated, QoS requirement for the service according to the first network side analysis data; or
selecting, by the UE in a case where cell selection is performed, a cell to be accessed according to the first network side analysis data.

11. The method of claim 10, wherein determining, by the UE, the PDU session parameter using the first network side analysis data comprises: performing, by the UE, a UE Route Selection Policy, URSP, to obtain corresponding PDU session parameters; and selecting the PDU session parameter used by the UE from the corresponding PDU session parameters using the first network side analysis data;
wherein determining, by the UE, the access network using the first network side analysis data comprises: performing, by the UE, an access network discovery and selection policy to determine corresponding access networks; and selecting the access network accessed by the UE from the corresponding access networks using the first network side analysis data; and
wherein determining, by the UE, the access mode using the first network side analysis data comprises: performing, by the UE, a path selection policy to obtain corresponding access modes; and determining whether to adopt 3rd Generation Partnership Project, 3GPP, network access or near field communication access from the corresponding access modes using the first network side analysis data.

12. The method of any one of claims 1 to 9, further comprising:
acquiring, by the UE, a UE policy from a second network function; and
performing, by the UE, matching on and/or using the UE policy according to the first network side analysis data.

13. The method of claim 12, wherein the UE policy comprises at least one of: an analysis identifier, an analysis sub-identifier or a corresponding threshold of the first network side analysis data.

14. The method of claim 12 or 13, wherein the UE policy comprises a service description, and the service description comprises at least one of: an analysis identifier, an analysis sub-identifier or a corresponding threshold of the first network side analysis data.

15. The method of claim 12 or 13, wherein the UE policy comprises a valid condition for a policy execution result, and the valid condition for the policy execution result comprises at least one of: an analysis identifier, an analysis sub-identifier or a corresponding threshold of the first network side analysis data.

16. The method of any one of claims 12 to 15, wherein the UE policy comprises at least one of: a URSP, an access network discovery and selection policy, or a path selection policy.

17. The method of any one of claims 12 to 16, wherein the second network function comprises a policy control function.

18. A method for acquiring network side analysis data, comprising:
acquiring, by a first network function, first network side analysis data generated by a network data analysis function; and
transmitting, by the first network function, the first network side analysis data to a User Equipment, UE.

19. The method of claim 18, wherein the first network side analysis data corresponds to an analysis identifier of the first network side analysis data.

20. The method of claim 19, wherein the analysis identifier of the first network side analysis data comprises at least one of: load analysis of a slice, service experience analysis of a slice or an application, network performance analysis, data congestion level analysis, or quality of service, QoS, change analysis.

21. The method of any one of claims 18 to 20, wherein before the acquiring, the method further comprises: receiving a first network data analysis request from the UE;
wherein the first network data analysis request comprises at least one of:
a UE identifier for requesting network data analysis;
an analysis identifier of the first network side analysis data;
filtering information for a requested analysis; or
analysis report limitation.

22. The method of claim 21, wherein the filtering information for the requested analysis comprises at least one of: a slice identifier, an application identifier, target area information of the requested analysis, target time period information of the requested analysis, a Data Network Name, DNN, or an analysis sub-identifier; and
the analysis report limitation comprises at least one of: an analytics target period, a reporting threshold, or an accuracy of the analytics.

23. The method of claim 22, wherein the analysis sub-identifier comprises at least one of: resource usage analysis, UE number analysis, mobility performance analysis, or call performance analysis.

24. The method of any one of claims 21 to 23, wherein acquiring the first network side analysis data generated by the network data analysis function comprises:
transmitting the first network data analysis request to the network data analysis function; and
receiving the first network side analysis data from the network data analysis function.

25. The method of any one of claims 21 to 23, wherein acquiring the first network side analysis data generated by the network data analysis function comprises:
determining a corresponding second network data analysis request according to the first network data analysis request;
transmitting the second network data analysis request to the network data analysis function;
receiving second network side analysis data from the network data analysis function; and
determining the corresponding first network side analysis data according to the second network side analysis data.

26. The method of any one of claims 20 to 25, wherein the first network function determines the network data analysis function according to the analysis identifier of the first network side analysis data.

27. The method of any one of claims 19 to 26, wherein the first network function comprises at least one of: a mobility management function, a session management function, a policy management function, or an application function with routing information known by the UE.

28. A method for transmitting network side analysis data, comprising:
generating, by a network data analysis function, first network side analysis data; and
transmitting, by the network data analysis function, the first network side analysis data to a User Equipment, UE.

29. The method of claim 28, wherein the first network side analysis data corresponds to an analysis identifier of the first network side analysis data.

30. The method of claim 29, wherein the analysis identifier of the first network side analysis data comprises at least one of: load analysis of a slice, service experience analysis of a slice or an application, network performance analysis, data congestion level analysis, or quality of service, QoS, change analysis.

31. The method of any one of claims 28 to 30, wherein before generating the first network side analysis data, the method further comprises: receiving a first network data analysis request from the UE;
wherein the first network data analysis request comprises at least one of:
a UE identifier for requesting network data analysis;
an analysis identifier of the first network side analysis data;
filtering information for a requested analysis; or
analysis report limitation.

32. The method of claim 31, wherein the filtering information for the requested analysis comprises at least one of: a slice identifier, an application identifier, target area information of the requested analysis, target time period information of the requested analysis, a Data Network Name, DNN, or an analysis sub-identifier; and
the analysis report limitation comprises at least one of: an analytics target period, a reporting threshold, or an accuracy of the analytics.

33. The method of claim 32, wherein the analysis sub-identifier comprises at least one of: resource usage analysis, UE number analysis, mobility performance analysis, or call performance analysis.

34. A method for transmitting a User Equipment, UE, policy, comprising:
transmitting, by a second network function, the UE policy to a UE, the UE policy comprising at least one of: an analysis identifier, an analysis sub-identifier or a corresponding threshold of a first network side analysis data.

35. The method of claim 34, wherein the UE policy comprises a service description, and the service description comprises at least one of: the analysis identifier, the analysis sub-identifier or the corresponding threshold of the first network side analysis data.

36. The method of claim 34, wherein the UE policy comprises a valid condition for a policy execution result, and the valid condition for the policy execution result comprises at least one of: the analysis identifier, the analysis sub-identifier or the corresponding threshold of the first network side analysis data.

37. The method of any one of claims 34 to 36, wherein the UE policy comprises at least one of: a UE Route Selection Policy, URSP, an access network discovery and selection policy, or a path selection policy.

38. The method of any one of claims 34 to 37, wherein the second network function comprises a policy control function.

39. A User Equipment, UE, comprising:
an analysis data receiving module, configured to receive first network side analysis data, the first network side analysis data being analysis data generated by a network data analysis function.

40. The UE of claim 39, wherein the first network side analysis data corresponds to an analysis identifier of the first network side analysis data.

41. The UE of claim 40, wherein the analysis identifier of the first network side analysis data comprises at least one of: load analysis of a slice, service experience analysis of a slice or an application, network performance analysis, data congestion level analysis, or quality of service, QoS, change analysis.

42. The UE of any one of claims 39 to 41, further comprising:
an analysis request transmitting module, configured to transmit a first network data analysis request;
wherein the first network data analysis request comprises at least one of:
a UE identifier for requesting network data analysis;
an analysis identifier of the first network side analysis data;
filtering information for a requested analysis; or
analysis report limitation.

43. The UE of claim 42, wherein the filtering information for the requested analysis comprises at least one of: a slice identifier, an application identifier, target area information of the requested analysis, target time period information of the requested analysis, a Data Network Name, DNN, or an analysis sub-identifier; and
the analysis report limitation comprises at least one of: an analytics target period, a reporting threshold, or an accuracy of the analytics.

44. The UE of claim 43, wherein the analysis sub-identifier comprises at least one of: resource usage analysis, UE number analysis, mobility performance analysis, or call performance analysis.

45. The UE of any one of claims 42 to 44, wherein
the analysis request transmitting module is configured to transmit the first network data analysis request to the network data analysis function through a user plane according to routing information of the network data analysis function; and
the analysis data receiving module is configured to receive the first network side analysis data from the network data analysis function.

46. The UE of any one of claims 42 to 44, wherein
the analysis request transmitting module is configured to transmit the first network data analysis request to a first network function; and
the analysis data receiving module is configured to receive the first network side analysis data from the first network function.

47. The UE of claim 46, wherein the first network function comprises at least one of: a mobility management function, a session management function, a policy management function, or an application function with routing information known by the UE.

48. The UE of any one of claims 39 to 47, further comprising:
a first analysis data usage module, configured to perform at least one of: determining a Packet Data Unit, PDU, session parameter using the first network side analysis data; determining an access network using the first network side analysis data; determining an access mode using the first network side analysis data; determining, in a case where the UE needs to initiate a service, QoS requirement for the service according to the first network side analysis data; or, selecting a cell to be accessed according to the first network side analysis data in a case where the UE performs cell selection.

49. The UE of claim 48, wherein the first analysis data usage module is configured to perform at least one of:
performing a UE Route Selection Policy, URSP, to obtain corresponding PDU session parameters, and selecting the PDU session parameter used by the UE from the corresponding PDU session parameters using the first network side analysis data;
performing an access network discovery and selection policy to determine corresponding access networks, and selecting the access network accessed by the UE from the corresponding access networks using the first network side analysis data; or
performing a path selection policy to obtain corresponding access modes, and determining whether the UE adopts 3rd Generation Partnership Project, 3GPP, network access or near field communication access from the corresponding access modes using the first network side analysis data.

50. The UE of any one of claims 39 to 47, further comprising:
a UE policy acquiring module, configured to acquire a UE Policy from a second network function; and
a second analysis data usage module, configured to perform matching on and/or use the UE policy according to the first network side analysis data.

51. The UE of claim 50, wherein the UE policy comprises at least one of: an analysis identifier, an analysis sub-identifier or a corresponding threshold of the first network side analysis data.

52. The UE of claim 50 or 51, wherein the UE policy comprises a service description, and the service description comprises at least one of: an analysis identifier, an analysis sub-identifier or a corresponding threshold of the first network side analysis data.

53. The UE of claim 50 or 51, wherein the UE policy comprises a valid condition for a policy execution result, and the valid condition for the policy execution result comprises at least one of: an analysis identifier, an analysis sub-identifier or a corresponding threshold of the first network side analysis data.

54. The UE of any one of claims 50 to 53, wherein the UE policy comprises at least one of: a URSP, an access network discovery and selection policy, or a path selection policy.

55. The UE of any one of claims 50 to 54, wherein the second network function comprises a policy control function.

56. A network device, comprising:
an analysis data acquiring module, configured to acquire first network side analysis data generated by a network data analysis function; and
an analysis data transmitting module, configured to transmit the first network side analysis data to a User Equipment, UE.

57. The network device of claim 56, wherein the first network side analysis data corresponds to an analysis identifier of the first network side analysis data.

58. The network device of claim 57, wherein the analysis identifier of the first network side analysis data comprises at least one of: load analysis of a slice, service experience analysis of a slice or an application, network performance analysis, data congestion level analysis, or quality of service, QoS, change analysis.

59. The network device of any one of claims 56 to 58, further comprising:
an analysis request receiving module, configured to receive a first network data analysis request from the UE;
wherein the first network data analysis request comprises at least one of:
a UE identifier for requesting network data analysis;
an analysis identifier of the first network side analysis data;
filtering information for a requested analysis; or
analysis report limitation.

60. The network device of claim 59, wherein the filtering information for the requested analysis comprises at least one of: a slice identifier, an application identifier, target area information of the requested analysis, target time period information of the requested analysis, a Data Network Name, DNN, or an analysis sub-identifier; and
the analysis report limitation comprises at least one of: an analytics target period, a reporting threshold, or an accuracy of the analytics.

61. The network device of claim 60, wherein the analysis sub-identifier comprises at least one of: resource usage analysis, UE number analysis, mobility performance analysis, or call performance analysis.

62. The network device of any one of claims 59 to 61, wherein the analysis data acquiring module is configured to transmit the first network data analysis request to the network data analysis function, and receive the first network side analysis data from the network data analysis function.

63. The network device of any one of claims 59 to 61, wherein the analysis data acquiring module is configured to determine a corresponding second network data analysis request according to the first network data analysis request, transmit the second network data analysis request to the network data analysis function, receive second network side analysis data from the network data analysis function, and determine the corresponding first network side analysis data according to the second network side analysis data.

64. The network device of any one of claims 58 to 63, wherein the analysis data acquiring module is configured to determine the network data analysis function according to the analysis identifier of the first network side analysis data.

65. The network device of any one of claims 57 to 64, wherein the network device comprises at least one of: a mobility management function, a session management function, a policy management function, or an application function with routing information known by the UE.

66. A network device, comprising:
a data generation module, configured to generate first network side analysis data; and
a transmitting module, configured to transmit the first network side analysis data to a User Equipment, UE.

67. The network device of claim 66, wherein the first network side analysis data corresponds to an analysis identifier of the first network side analysis data.

68. The network device of claim 67, wherein the analysis identifier of the first network side analysis data comprises at least one of: load analysis of a slice, service experience analysis of a slice or an application, network performance analysis, data congestion level analysis, or quality of service, QoS, change analysis.

69. The network device of any one of claims 66 to 68, further comprising: a receiving module, configured to receive a first network data analysis request from the UE;
wherein the first network data analysis request comprises at least one of:
a UE identifier for requesting network data analysis;
an analysis identifier of the first network side analysis data;
filtering information for a requested analysis; or
analysis report limitation.

70. The network device of claim 69, wherein the filtering information for the requested analysis comprises at least one of: a slice identifier, an application identifier, target area information of the requested analysis, target time period information of the requested analysis, a Data Network Name, DNN, or an analysis sub-identifier; and
the analysis report limitation comprises at least one of: an analytics target period, a reporting threshold, or an accuracy of the analytics.

71. The network device of claim 70, wherein the analysis sub-identifier comprises at least one of: resource usage analysis, UE number analysis, mobility performance analysis, or call performance analysis.

72. A network device, comprising:
a User Equipment, UE, policy transmitting module, configured to transmit a UE policy to a UE, the UE policy comprising at least one of: an analysis identifier, an analysis sub-identifier or a corresponding threshold of first network side analysis data.

73. The network device of claim 72, wherein the UE policy comprises a service description, and the service description comprises at least one of: the analysis identifier, the analysis sub-identifier or the corresponding threshold of the first network side analysis data.

74. The network device of claim 72, wherein the UE policy comprises a valid condition for a policy execution result, and the valid condition for the policy execution result comprises at least one of: the analysis identifier, the analysis sub-identifier or the corresponding threshold of the first network side analysis data.

75. The network device of any one of claims 72 to 74, wherein the UE policy comprises at least one of: a UE Route Selection Policy, URSP, an access network discovery and selection policy, or a path selection policy.

76. The network device of any one of claims 72 to 75, wherein the network device comprises a policy control function.

77. A terminal device, comprising: a processor and a memory, wherein the memory is configured to store a computer program, and the processor is configured to call and run the computer program stored in the memory to execute the method of any one of claims 1 to 17.

78. A network device, comprising: a processor and a memory, wherein the memory is configured to store a computer program, and the processor is configured to call and run the computer program stored in the memory to execute the method of any one of claims 18 to 38.

79. A chip, comprising: a processor, configured to call a computer program from a memory and run the computer program, to cause a device mounted with the chip to execute the method of any one of claims 1 to 17.

80. A chip, comprising: a processor, configured to call a computer program from a memory and run the computer program, to cause a device mounted with the chip to execute the method of any one of claims 18 to 38.

81. A computer readable storage medium, configured to store a computer program that causes a computer to execute the method of any one of claims 1 to 17.

82. A computer readable storage medium, configured to store a computer program that causes a computer to execute the method of any one of claims 18 to 38.

83. A computer program product, comprising one or more computer program instructions that cause a computer to execute the method of any one of claims 1 to 17.

84. A computer program product, comprising one or more computer program instructions that cause a computer to execute the method of any one of claims 18 to 38.

85. A computer program, causing a computer to execute the method of any one of claims 1 to 17.

86. A computer program, causing a computer to execute the method of any one of claims 18 to 38.
